(19) **Europäisches Patentamt / European Patent Office / Office européen des brevets**

(11) **EP 2 128 872 B1**

(12) **EUROPEAN PATENT SPECIFICATION**

(45) Date of publication and mention
of the grant of the patent:
**05.07.2017 Bulletin 2017/27**

(51) Int Cl.:
***G21F 1/04*** *(2006.01)*  ***C04B 7/345*** *(2006.01)*

(21) Application number: **08738736.1**

(22) Date of filing: **17.03.2008**

(86) International application number:
**PCT/JP2008/055346**

(87) International publication number:
**WO 2008/114877 (25.09.2008 Gazette 2008/39)**

(54) **LOW-ACTIVATION HYDRAULIC SETTING COMPOSITION, LOW-ACTIVATION CEMENT, AND THOSE PRODUCTION METHODS**

HYDRAULISCHE ABBINDEZUSAMMENSETZUNG MIT NIEDRIGER AKTIVIERUNG, ZEMENT MIT NIEDRIGER AKTIVIERUNG UND HERSTELLUNGSVERFAHREN DAFÜR

COMPOSITION À PRISE HYDRAULIQUE À FAIBLE ACTIVATION, CIMENT À FAIBLE ACTIVATION, ET LEURS PROCÉDÉS DE PRODUCTION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.03.2007 JP 2007069586**

(43) Date of publication of application:
**02.12.2009 Bulletin 2009/49**

(73) Proprietor: **Denka Company Limited**
**Tokyo 103-8338 (JP)**

(72) Inventors:
• **MORI, Taiichiro**
**Itoigawa-shi, Niigata 949-0393 (JP)**
• **YOSHINO, Ryoetsu**
**Itoigawa-shi, Niigata 949-0393 (JP)**
• **HIGUCHI, Takayuki**
**Itoigawa-shi, Niigata 949-0393 (JP)**

(74) Representative: **Vossius & Partner**
**Patentanwälte Rechtsanwälte mbB**
**Siebertstrasse 3**
**81675 München (DE)**

(56) References cited:
**EP-A1- 0 579 831      WO-A1-2005/019131**
**JP-A- 04 097 932      JP-A- 62 035 295**
**JP-A- 2002 328 195    US-A- 4 605 443**

• **DATABASE WPI Week 198712 Thomson Scientific, London, GB; AN 1987-083547 XP000002658734, KONNO, M.: "Concrete for shielding radiation", & JP 62 035295 A (FUJITA KOGYO KK) 16 February 1987 (1987-02-16)**
• **KINNO, M.; ET AL.: "Raw materials for low-activation concrete neutron shields", JOURNAL OF NUCLEAR SCIENCE AND TECHNOLOGY, vol. 39, no. 12, December 2002 (2002-12), pages 1275-1280, XP8142578,**

**Description**

The present invention relates to a low-activation hydraulic composition for use in low-activation concrete, low-activation cement, and a method for manufacturing them.

The "low-activation concrete" means a concrete that combines a radiation shield function with a function of reducing residual radiations, and it has been used in installations in association with atomic powers and accelerators, and so on. As known so far in the art, white cement, and high-alumina cement has been used for this low-activation concrete (for instance, see Patent Publication 1 and Non-Patent Publication 1). These cements have the feature of being lower than other cements inclusive of normal Portland cement and blast furnace cement in terms of the contents of Eu and Co that are the parent elements of $^{152}$Eu having a half life of $T_{1/2}$=13.54 years or $^{154}$Eu having a half life of $T_{1/2}$=8.593 years and $^{60}$Co having a half life of $T_{1/2}$=5.271 years that are governing nuclides with respect to clearance level concentration ratios (for instance, see Non-Patent Publications 2 and 3).

However, a problem with white cement is that it is inferior in the radiation reducing function to high-alumina cement, and a problem with high-alumina cement is that it is difficult to keep long-term strength due to a phase transfer (conversion). Note here that the lower limit contents of Eu and Co to satisfy the clearance level is said to have to be less than 0.3 mg/kg for Eu and less than 15 mg/kg for Co (for instance, see Non-Patent Publication 3).

On the other hand, there has been a hydraulic compound comprising a CaO-Al$_2$O$_3$-SiO$_2$ base glass known in the art (for instance, see Patent Publication 2 and Non-Patent Publication 4). This is known to react with water, yielding a hydrate that is composed mainly of hydrogarnet (3CaO·Al$_2$O$_3$·6H$_2$O) and stratlingite (2CaO·Al$_2$O$_3$·SiO$_2$·8H$_2$O), and superior in resistance to sulfates and acids (for instance, see Non-Patent Publication 4). However, there is nothing said about it being used as an admixture or applied to low-activation cement.

Available now is also a material composed mainly of a cementitious substance, ultra-fine powders, high-performance water reducing agent and water, and a material composed mainly of calcium aluminate, ultra-fine powders and high-performance water reducing agent (for instance, see Patent Publications 3 and 4). However, the chemical compositions of CaO, Al$_2$O$_3$ and SiO$_2$ are distinguished from the composition of the present invention (for instance, see Non-Patent Publication 5).

Patent Publication 1: JP 62-133394 A
Patent Publication 2: USP 4,605,443
Patent Publication 3: JP 2501576 B2
Patent Publication 4: JP 61-215999 A
Non-Patent Publication 1: Masaharu KANEKO, "The Present Situation of Development of Low-Activation Concrete", Concrete Engineering, Japan Concrete Institute, June 2004, Vol. 42, No. 6, pp. 3-10
Non-Patent Publication 2: Masaharu KINNO, Ken-ichi KIMURA and Takashi NAKAMURA, "Raw Materials for Low-Activation Concrete Neutron Shields", Journal of NUCLEAR SCIENCE and TECHNOLOGY, December 2002, Vol. 39, No. 12, pp. 1275-1280
Non-Patent Publication 3: Koji SHIRAI and Ryoji SONOBE, "Development of Low-Activation and High-Performance Materials for Concrete Casks", Central Research Institute of Electric Power Industry Report, July 2005, No. 4033
Non-Patent Publication 4: JOHN F. MacDOWELL, "STRATLINGITE AND HYDROGARNET FROM CALCIUM ALUMINOSILICATE GLASS CEMENTS", Mat. Res. Soc. Symp. Proc., Materials Research Society, 1991, Vol. 179, pp. 159-179
Non-Patent Publication 5: Yasuo ARAI, "Material Chemistry of Cements", Dainippon Tosho Publishing Co., Ltd. pp. 204-205, Table 6·1, pp. 210-211, Table 6·4

EP-0 579 831 A1, JP-2002-328195 A, and JP-62-035295 A relate to the technological background.

The present invention has for its object to provide a low-activation hydraulic composition, low-activation cement and a method for manufacturing them. This object is achieved with the features of the claims.

According to the invention, it is possible to provide a low-activation cement concrete structure capable of blocking off radiations.

BEST MODE FOR CARRYING OUT THE INVENTION

The "clearance level" used herein refers to the concentration of radionuclides that is a criterion of judgement for factoring out a material that may be taken out of a regulation system about radiation shield. For instance, according to the technical document "Clearance levels of radionuclides in solid materials", the International Atom Energy Association (IAEA) (TECDOC-855, January 1996), the concentration of radionuclides equivalent to 10 μSv/year should be less than 0.1 Bq/g for the respective radionuclides: $^{152}$Eu, $^{154}$Eu and $^{60}$Co.

The parts and % used herein are given on a mass basis unless otherwise stated, and the "cement concrete" used herein is a general term of cement paste, mortar, and concrete.

The "calcium aluminosilicate" used herein refers to a hydraulic composition wherein the contents of Eu and Co that are the parent elements of $^{152}$Eu and $^{60}$Co that become the governing nuclides for the clearance level concentration ratio are less than 0.3 mg/kg for Eu and less than 15 mg/kg for Co. As a hydraulic composition departing from these ranges is used in nuclear energy installations or the like, it causes Eu and Co contained in cement concrete to decay into $^{152}$Eu and $^{60}$Co, permitting them to assume on radiations. Consequently, there is a great risk of operators being exposed to radiations during maintenance or giving rise to large quantities of radioactive waste during dismantling.

The contents of Eu and Co contained in the calcium aluminosilicate is less than 0.08 mg/kg for Eu and less than 2 mg/kg for Co.

Reference is now made to how to manufacture the calcium aluminosilicate according to the invention. The calcium aluminosilicate here comprises $CaO$, $Al_2O_3$ and $SiO_2$ as main chemical components.

By way of example but not by way of limitation, the $CaO$ raw material may be quicklime (a0), slaked lime ($ca(OH)_2$), and limestone ($CaCO_3$). In any event, it is preferable to use the $CaO$ raw material that satisfies the clearance level.

By way of example but not by way of limitation, the $Al_2O_3$ raw material used may be selected from the ones that satisfy the clearance level. In view of cost and availability, it is preferable to use the Bayer process alumina.

The "Bayer process alumina" refers to $\alpha$-alumina that is obtained by dissolving the staring bauxite in caustic soda in an autoclave, crystallizing out aluminum hydroxide from the refined solution, and firing it at higher than 1,200°C in a rotary kiln. By way of example but not by way of limitation, the Bayer process alumina used herein should preferably be represented by a chemical composition wherein the $Al_2O_3$ component accounts for at least 90%, especially at least 95%. The content of $Na_2O$ contained in the Bayer process alumina used herein should preferably be up to 0.5%, especially up to 0.3%. It is not preferable that the content of $Na_2O$ grows greater than 0.5%, because fluidity may go low when it is formulated into a low-activation hydraulic composition. Alternatively, a short-lived nuclide: $^{24}$Na (having a half life of $T_{1/2}$=14.96 years) may occur due to neutrons' capture reactions.

By way of example but not by way of limitation, the $SiO_2$ raw material used herein may be silica stone, silica sand, quartz, and diatomaceous earth. In any case, it is preferable to use the $SiO_2$ raw material that satisfies the clearance level.

It is preferable that the calcium aluminate of the invention comprises three components: $CaO$, $Al_2O_3$ and $SiO_2$ as basic chemical components, and further contains a small amount of $MgO$ and $ZrO_2$ for the purpose of improving fluidity.

By way of example but not by way of limitation, the $MgO$ raw material used therein may be magnesia such as fused magnesia, sintered magnesia, naturally occurring magnesia, and calcinated magnesia. The "$MgO$ raw material" used herein refers to the one that is obtained by firing magnesia hydroxide ($Mg(OH)_2$) extracted out of seawater by the seawater process, magnesia carbonate ($MgCO_3$), magnesite that is naturally occurring $MgO$, or naturally occurring magnesia in a rotary kiln, and pulverizing and sieving out the ensuing sintered magnesia clinker or electrofused magnesia clinker obtained by fusing that sintered magnesia clinker in an electric furnace or the like.

Although there is no particular limitation on the $ZrO_2$ raw material used herein, it is preferable to use the $ZrO_2$ raw material that satisfies the clearance level. Among others, it is most preferable to use the $ZrO_2$ raw material starting from an acid solution zirconium oxychloride obtained by breaking down minerals such as zircon or baddeleyite by an alkali for extraction. For instance, there is the mention of zirconium oxide, zirconium hydroxide, zirconium carbonate, zirconium oxychloride, zirconium sulfate, zirconium acetate, and organic acid zirconium. Note here that when the $CaO$, $Al_2O_3$, $SiO_2$ and $ZrO_2$ raw materials already contain $MgO$ and $ZrO_2$, it is not necessary to add fresh $MgO$ and $ZrO_2$ raw materials.

Referring here to the components included in the calcium aluminosilicate, the Eu and Co contents are less than 0.08 mg/kg and less than 2 mg/kg, respectively. First, these raw materials are blender together at a given proportion, and the ensuing blend is then fused in an electric furnace, a highfrequency furnace or a kiln furnace, and quenched for vitrification, thereby making cement clinker. The fusing temperature is preferably higher than 1,500°C, and more preferably 1,600°C. At lower than 1,500°C, the fusion of the raw materials may often be insufficient or vitrification by quenching may often be impossibly.

The cement clinker has a percentage of glass content of at least 70%, preferably at least 80%, and most preferably at least 90%. At a percentage of glass content of less than 70%, there would often be no sufficient hydration activity obtained. The percentage of glass content was measured by the following X-ray diffraction Rietveld method. That is, given amounts of internal standard substances such as aluminum oxide and magnesium oxide are added to a pulverized sample, and they are fully mixed together in an agate mortar, following which powder X-ray diffraction measurement is implemented. The results of measurement are analyzed on quantitative estimation software, for which "SIROQUANT" made by Sietronics Co., Ltd. may be used.

The calcium aluminosilicate of the invention may also be manufactured by pulverization of cement clinker. The calcium aluminosilicate has a chemical composition of, in the total of $CaO$, Al2O3, Si02, $MgO$ and Zr02, 25 to 55 parts of $CaO$, 16 to 45 parts of Al2O3, 23 to 40 parts Si02, 0 to 1 part of $MgO$ and 0 to 4 parts of Zr02, and preferably 27 to 53 parts of CaO, 17 to 43 parts in the total of CaO, $Al_2O_3$, $SiO_2$, MgO and $ZrO_2$, of $Al_2O_3$, 25 to 38 parts of $SiO_2$, 0 to 1 part of MgO and 0 to 3 parts of $ZrO_2$. Outside this range, there would often be no sufficient fluidity, strength and dimensional stability obtained, or there would often be increasing heat of hydration occurring. MgO should preferably be contained in an amount of at least 0.05 parts, because upon formulated into mortar concrete, there are improvements in fluidity and compressive strength. However, mortar concrete containing 0.05 parts or more of MgO is sometimes not preferable, because not only is its self-shrinkage increased, but also a short-lived nuclide: $^{24}Na$ having a half life of $T_{1/2}$=4.96 hours yields.

On the other hand, $ZrO_2$ should preferably be contained in an amount of at least 0.5 parts, because there are improvements in fluidity and compressive strength when there is no activation due to a small absorption sectional area of thermal neutrons or when it is formulated into mortar concrete. However, mortar concrete containing more than 4 parts of $ZnO_2$ is sometimes not preferable because of increased self-shrinkage.

The calcium aluminosilicate of the invention may contain small amounts of unreacted CaO (free calcium oxide), unreacted $Al_2O_3$, dicalcium silicate ($2CaO \cdot SiO_2$), or ghelenite ($2CaO \cdot Al_2O_3 \cdot SiO_2$) in a range undetrimental to its properties. However, it is here noted that in the end product of calcium aluminosilicate, the unreacted CaO (free calcium oxide (free lime) should be contained in an amount of preferably less than 2 parts, and more preferably less than 1 part in the calcium aluminosilicate. Mortar concrete containing more than 2 parts of free calcium oxide is sometimes not preferable because workability goes much worse.

There is no particular limitation on how to pulverize calcium aluminosilicate clinker alone or pulverize a mixture of calcium aluminosilicate and cement; however, it is preferable to rely upon milling machinery such as roller mills, jet mills, tube mills, ball mills, and vibration mills. In any case, it is preferable to make use of a milling machine that is excellent in wear resistance and contains limited amounts of Eu and Co.

Calcium aluminosilicate obtained by pulverizing cement clinker alone using such a milling machine or a low-activation hydraulic composition or low-activation cement obtained by pulverizing a mixture of cement clinker or cement using that milling machine should have a particle size of preferably 2,000 to 8,000 $cm^2$/g, and more preferable 4,000 to 6,000 $cm^2$/g in terms of the Blaine's specific surface area. At less than 2,000 $cm^2$/g, there would often be a shortage of strength due to insufficient hydration activity, and at greater than 8,000 $cm^2$/g, there would often be too much milling power needed, resulting in wastefulness.

For instance, the contents of Eu and Co in the low-activation hydraulic composition and low-activation cement may be found by implementing pretreatment according to JIS R 2522, and then carrying out analysis using ICP-AES or ICP-MS. Alternatively, they may be determined using the activation analysis method.

There is no particular limitation on the cement used herein: ordinary cements may be used. Specifically, use is made of various Portland cements such as normal, high-early strength, super-early-strength, moderate heat, and low heat Portland cements; various mixed cements wherein these Portland cements are mixed with blast furnace slag, fly ash or silica; filler cements wherein the Portland cements are mixed with fine powders of limestone, fine powders of slow-cooled slag, and so on; recycling cements or the so-called eco-cements, alumina cements, high-alumina cements, and so on, among which one or two or more may be used in admixture.

The low-activation cement of the invention should preferably contain gypsum.

For the gypsum, use may be made of anhydrous gypsum, hemi-hydrate gypsum, dihydrate gypsum, and so on, among which one or two or more may be used in admixture. Among others, it is preferable to use anhydrous gypsum in view of the ability to develop strength. The gypsum may have as fine particle size as used in ordinary cements; for instance, it may have a Blaine's specific surface area of preferably at least 2,500 $cm^2$/g, and more preferably at least 3,000 $cm^2$/g.

The amount of the gypsum used herein should be preferably 1 to 10 parts, and more preferably 3 to 7 parts in 100 parts of the low-activation cement comprising calcium aluminosilicate and cement with the gypsum added to them as required. At less than 1 part, there is an occasion that shrinkage grows large or there is no effect on making the heat-of-hydration temperature low, and at greater than 10 parts, there is an occasion that no sufficient fluidity is obtained or the ability of develop strength goes worse.

The amount of the inventive calcium aluminosilicate used should be preferably 35 to 98 parts, more preferably 38 to 96 parts, and most preferably 45 to 80 parts in 100 parts of the low-activation cement comprising calcium aluminosilicate and cement with the gypsum added to them as required. At less than 35 parts, the reductions of the contents of Co and Eu in the low-activation cement - the advantage of the invention are not achievable. Besides, there is an occasion that shrinkage grows large or there is no effect on making the heat-of-hydration temperature low, and at greater than 98 parts, there is an occasion that the ability of develop strength goes worse.

Referring to the low-activation cement here, the contents of Eu and Co that are the parent elements of $^{152}Eu$ and $^{60}Co$ that are the governing nuclides for the clearance level concentration ratio cannot be determined with a single meaning, although depending on where it is to be used. For instance, when it is used in a concrete storage container for fuel spent in a pressurized light-water reactor (P PWR) (the highest burning degree: 55 GWD/tU, 10-year cooling×21 units), however, the low-activation cement should preferably be a hydraulic composition having an Eu content of less than 0.3 mg/kg and a Co content of less than 15 mg/kg, as known from Non-Patent Publication 3. As a hydraulic composition departing from these ranges is used in nuclear energy installations or the like, it causes Eu and Co contained in cement concrete to decay into $^{152}$Eu and $^{60}$Co, permitting them to assume on radiations. Consequently, there is a great risk of operators being exposed to radiations during maintenance or giving rise to large quantities of radioactive waste during dismantling.

The contents of Eu and Co contained in the low-activation cement is less than 0.08 mg/kg for Eu and less than 2 mg/kg for Co.

When the inventive low-activation cement is used, there is no particular limitation on the water-powder ratio; however, it is preferably up to 70%, more preferably up to 60%, and most preferably 50%. A water-powder ratio of greater than 70% is not preferable, because the cured structure of the low-activation cement gets coarse, causing its radiation shield capability to go worse. The lower limit to the water-powder ratio is preferably at least 20%, and more preferably at least 25%.

For the aggregate used in the invention, it is preferable to make use of those having a low-activation function, for instance, electrofused alumina and limestone. In combination with the low-activation cement, use may be made of water reducing agents, high-performance water reducing agents, AE water reducing agents, fluidizers, viscosity increasing agents, rust preventives, anti-freezers, shrinkage reducing agents, condensation adjusters, silica, alumina, finely divided limestone, colemanite, zirconia, boron carbide, clay minerals such as bentonite, anion exchangers such as hydrotalcite, and fibrous substances such as vinylon fibers, acryl fibers and carbon fibers, among which one or two or more may be used in a range undetrimental to the object of the invention.

According to the invention, there can be a low-activation hydraulic composition, and low-activation cement obtained which has not only the radiation shield capability but also reduced contents of Eu and Co responsible for residual radiation. According to the invention, satisfactory fluidity, the ability to develop strength and dimensional stability are obtained. In addition, there is a low-activation hydraulic composition and low-activation cement obtained which has not only satisfactory fluidity, the ability to develop strength and dimensional stability but also makes low the heat-of-hydration temperature responsible for temperature cracking, and there is a method of manufacturing them obtained as well.

Example 1

Calcium aluminosilicate samples having the compositions shown in Table 1 were prepared. Low-activation cement samples having the compositions shown in Table 2 were prepared and measured for their Eu and Co contents according to the given method. The results are tabulated in Table 2.

(Materials Used)

Calcium Aluminosilicate a1 to i6

CaO raw material, $Al_2O_3$ raw material, $SiO_2$ raw material, MgO raw material and $ZrO_2$ raw material were mixed and pulverized in such a way as to have compositions a1 to i6 in Table 2. Then, the pulverized product was placed in a platinum dish and fused at 1,650°C for 1 hour. After fusing, the platinum dish with the sample placed in it was placed on a water bath for quenching. In this way, samples having varying percentages of glass content were prepared. Each sample was pulverized to a Blaine's specific surface area of 4,000 $cm^2$/g, using a pulverizer.

CaO Raw Material

Fired product of limestone produced in Uonuma in Niigata Prefecture, and made up of 99% of CaO, 0% of $Al_2O_3$, 1% of $SiO_2$, 0% of MgO, and 0% of $ZrO_2$ with 0.23 mg/kg of Co and 0.083 mg/kg of Eu.

$Al_2O_3$ Raw Materials 1

Aluminum oxide made by Nippon Light Metal Co., Ltd. and obtained by the Bayer method or, specifically, by dissolving the starting bauxite in caustic soda in an autoclave, crystallizing out aluminum hydroxide from a refined solution thereof, and firing it at 1,200°C in a rotary kiln. This aluminum oxide was made up of 0% of CaO, 100% of $Al_2O_3$, 0% of $SiO_2$, 0% of MgO and 0% of $ZrO_2$ with 0.013 mg/kg of Co and 0.0005 mg/kg of Eu.

$Al_2O_3$ Raw Material 2

Bauxite produced in China and made up of 1% of CaO, 92% of $Al_2O_3$, 7% of $SiO_2$, 0% of MgO and 0% of $ZrO_2$ with 39 mg/kg of Co and 1.6 mg/kg of Eu.

SiO$_2$ Raw Material

Silica sand produced in Australia and made up of 0% of CaO, 2% of Al$_2$O$_3$, 98% of SiO$_2$, 0% of MgO and 0% of ZrO$_2$ with 0.013 mg/kg of Co and 0.001 mg/kg of Eu.

MgO Raw Material

Commercial product made by Kanto Kagaku Co., Ltd. and made up of 0% of CaO, 0% of Al$_2$O$_3$, 0% of SiO$_2$, 100% of MgO and 0% of ZrO$_2$ with 0.18 mg/kg of Co and 0.057 mg/kg.

ZrO$_2$ Raw Material

Commercial product made by Daiichi Kigenso Kagaku Kogyo Co., Ltd. and made up of 0% of CaO, 0% of Al$_2$O$_3$, 0% of SiO$_2$, 0% of MgO and 100% of ZrO$_2$ with 0.025 mg/kg of Co and 0.0007 mg/kg.

White Cement

Commercial Product made and sold by Taiheiyo Cement Corporation in the name of "White Cement" and with a density of 3.05 g/cm$^3$ and a Blaine's specific surface area of 3,700 cm$^2$/g.

Normal Portland Cement

Commercial product made and sold by Denki Kagaku Kogyo Kabushiki Kaisha in the name of "Normal Portland Cement" and with a density of 3.15 g/cm$^3$ and a Blaine's specific surface area of 3,400 cm$^2$/g.

Moderate Heat Portland Cement

Commercial product made and sold by Denki Kagaku Kogyo Kabushiki Kaisha in the name of "Denka Moderate Heat Portland Cement" and with a density of 3.20 g/cm$^3$ and a Blaine's specific surface area of 3,100 cm$^2$/g.

Low Heat Portland Cement

Commercial Product made and sold by Taiheiyo Cement Corporation in the name of "Low Heat Portland Cement" and with a density of 3.21 g/cm$^3$ and a Blaine's specific surface area of 3,400 cm$^2$/g.

Fly Ash Cement

Commercial Product made and sold by Denki Kagaku Kogyo Kabushiki Kaisha in the name of "Denka Fly Ash Cement (Type B)" and with a density of 2.96 g/cm$^3$ and a Blaine's specific surface area of 3,300 cm$^2$/g.

Blast-Furnace Cement

Commercial Product made and sold by Denki Kagaku Kogyo Kabushiki Kaisha in the name of "Denka Blast-Furnace Cement" and with a density of 3.05 g/cm$^3$ and a Blaine's specific surface area of 3,800 cm$^2$/g.

Alumina Cement #1

Commercial Product made and sold by Denki Kagaku Kogyo Kabushiki Kaisha in the name of "Denka Alumina Cement #1" and with a density of 3.00 g/cm$^3$ and a Blaine's specific surface area of 4,800 cm$^2$/g.

High-Alumina Cement

Commercial Product made and sold by Denki Kagaku Kogyo Kabushiki Kaisha in the name of "Denka High-Alumina Cement" and with a density of 3.13 g/cm$^3$ and a Blaine's specific surface area of 4,800 cm$^2$/g.

Fly Ash

Product produced in the coal thermal power plant according to JIS II Type and with a density of 2.9 g/cm$^2$ and

a Blaine's value of 3,500 cm$^2$/g.

Blast-Furnace Slag

Commercial product made and sold by Nippon Steel Blast-Furnace Slag Cement Co., Ltd. in the name of "Esment" and with density of 2.9 g/cm$^2$ and a Blaine's value of 4,000 cm$^2$/g.

Gypsum

Commercial anhydrous gypsum product having a density of 2.94 g/cm$^3$ and a Blaine's specific surface area of 4 000 cm$^2$/g.

(Measuring Methods)

Chemical Composition

The composition of CaO, Al$_2$O$_3$, and SiO$_2$ was determined according to JIS R 5202-1999 "Chemical analysis method for Portland cements", and the composition of ZrO$_2$ was found pursuant to JIS R 2013-1998 "Chemical analysis method for alumina-zirconia-silica base refractory materials".

Content of Activation Components (Testing for Eu and Co Contents)

For the measurement of the contents of Eu and Co in low-activation cement, cement was first pretreated according to JIS R 2522-1995 "Chemical analysis method for alumina cement for refractory materials". Then, ICP-AES (VISTA-PRO Type made by SII Nano-Technology Co., Ltd.) was used to measure the contents of Eu and Co.

Percentage of Glass Content

Magnesium hydroxide (0.5 pars) was added to and fully mixed with 4.5 parts of a low-activation hydraulic composition in an agate mortar for powder X-tray diffractometry. The results of measurement were analyzed on quantitative estimation software "SIROQUANT" made by Sietronics Co., Ltd. to find the percentage of glass content.

[Table 1]

| CAS | Chemical Composition (%) | | | | | | Class Content (%) | Amount of Free Lime (%) | Contents of Activation Components (mg/kg) | | |
|---|---|---|---|---|---|---|---|---|---|---|---|
| | CaO | Al₂O₃ | SiO₂ | MgO | ZrO₂ | Total | | | Co | Eu | |
| a1 | 24 | 40 | 36 | 0 | 0 | 100 | 100 | 0 | 0.07 | 0.02 | (x) |
| a2 | 25 | 39 | 36 | 0 | 0 | 100 | 100 | 0 | 0.07 | 0.02 | |
| a3 | 40 | 30 | 30 | 0 | 0 | 100 | 100 | 0 | 0.10 | 0.03 | |
| a4 | 50 | 20 | 30 | 0 | 0 | 100 | 100 | 0 | 0.12 | 0.04 | |
| a5 | 55 | 19 | 26 | 0 | 0 | 100 | 100 | 0 | 0.13 | 0.05 | |
| b1 | 53 | 15 | 32 | 0 | 0 | 100 | 100 | 0 | 0.13 | 0.04 | (x) |
| b2 | 52 | 16 | 32 | 0 | 0 | 100 | 100 | 0 | 0.13 | 0.04 | |
| b3 | 44 | 25 | 31 | 0 | 0 | 100 | 100 | 0 | 0.11 | 0.04 | |
| b4 | 36 | 35 | 29 | 0 | 0 | 100 | 100 | 0 | 0.09 | 0.03 | |
| b5 | 28 | 45 | 27 | 0 | 0 | 100 | 100 | 0 | 0.07 | 0.02 | |
| b6 | 27 | 46 | 27 | 0 | 0 | 100 | 100 | 0 | 0.07 | 0.02 | |
| c2 | 44 | 33 | 23 | 0 | 0 | 100 | 100 | 0 | 0.11 | 0.04 | (x) |
| c3 | 39 | 31 | 30 | 0 | 0 | 100 | 100 | 0 | 0.10 | 0.03 | |
| c4 | 34 | 30 | 36 | 0 | 0 | 100 | 100 | 0 | 0.09 | 0.03 | |
| c5 | 29 | 31 | 40 | 0 | 0 | 100 | 100 | 0 | 0.08 | 0.02 | |
| c6 | 27 | 32 | 41 | 0 | 0 | 100 | 100 | 0 | 0.07 | 0.02 | |
| d1 | 50 | 20 | 29 | 1 | 0 | 100 | 100 | 0 | 0.12 | 0.04 | |
| d2 | 49 | 20 | 29 | 2 | 0 | 100 | 100 | 0 | 0.12 | 0.04 | |
| e1 | 50 | 20 | 29 | 0 | 1 | 100 | 100 | 0 | 0.12 | 0.04 | |
| e2 | 49 | 19 | 29 | 0 | 3 | 100 | 100 | 0 | 0.12 | 0.04 | |
| e3 | 49 | 18 | 29 | 0 | 4 | 100 | 100 | 0 | 0.12 | 0.04 | |
| f1 | 49 | 20 | 29 | 1 | 1 | 100 | 100 | 0 | 0.12 | 0.04 | |
| f2 | 49 | 18 | 29 | 1 | 3 | 100 | 100 | 0 | 0.12 | 0.04 | |
| g1 | 50 | 20 | 30 | 0 | 0 | 100 | 69 | 0 | 0.12 | 0.04 | |
| g2 | 50 | 20 | 30 | 0 | 0 | 100 | 70 | 0 | 0.12 | 0.04 | |
| g3 | 50 | 20 | 30 | 0 | 0 | 100 | 80 | 0 | 0.12 | 0.04 | |
| g4 | 50 | 20 | 30 | 0 | 0 | 100 | 90 | 0 | 0.12 | 0.04 | |
| h1 | 50 | 20 | 30 | 0 | 0 | 100 | 100 | 1 | 0.12 | 0.04 | |
| h2 | 50 | 20 | 30 | 0 | 0 | 100 | 100 | 2 | 0.12 | 0.04 | |

(continued)

| CAS | Chemical Composition (%) | | | | | | Class Content (%) | Amount of Free Lime (%) | Contents of Activation Components (mg/kg) | | |
|---|---|---|---|---|---|---|---|---|---|---|---|
| | CaO | Al$_2$O$_3$ | SiO$_2$ | MgO | ZrO$_2$ | Total | | | Co | Eu | |
| h3 | 50 | 20 | 30 | 0 | 0 | 100 | 100 | 3 | 0.12 | 0.04 | |
| i1 | 50 | 19 | 31 | 0 | 0 | 100 | 100 | 0 | 14.92 | 0.28 | (x) |
| i2 | 50 | 19 | 31 | 0 | 0 | 100 | 100 | 0 | 14.18 | 0.27 | (x) |
| i3 | 50 | 19 | 31 | 0 | 0 | 100 | 100 | 0 | 10.48 | 0.21 | (x) |
| i4 | 50 | 20 | 30 | 0 | 0 | 100 | 100 | 0 | 5.30 | 0.13 | (x) |
| i5 | 50 | 20 | 30 | 0 | 0 | 100 | 100 | 0 | 1.60 | 0.07 | |
| i6 | 50 | 20 | 30 | 0 | 0 | 100 | 100 | 0 | 0.86 | 0.05 | |
| Fly Ash | 6 | 28 | 65 | 1 | 0 | 100 | 100 | 0 | 57.48 | 3.23 | |
| Blast Furnace Slag | 46 | 15 | 33 | 6 | 0 | 100 | 100 | 0 | 3.19 | 3.23 | |

CAS is an abbreviation of calcium aluminosilicate.
The amount of free lime is indicated by the value of free lime in the calcium aluminosilicate.
i1 is obtained by mixing Al$_2$O$_3$ raw material 1 and Al$_2$O$_3$ raw material 2 at a mass ratio of 0/100.
i2 is obtained by mixing Al$_2$O$_3$ raw material 1 and Al$_2$O$_3$ raw material 2 at a mass ratio of 5/95.
i3 is obtained by mixing Al$_2$O$_3$ raw material 1 and Al$_2$O$_3$ raw material 2 at a mass ratio of 30/70.
i4 is obtained by mixing Al$_2$O$_3$ raw material 1 and Al$_2$O$_3$ raw material 2 at a mass ratio of 65/35.
i5 is obtained by mixing Al$_2$O$_3$ raw material 1 and Al$_2$O$_3$ raw material 2 at a mass ratio of 90/10.
i6 is obtained by mixing Al$_2$O$_3$ raw material 1 and Al$_2$O$_3$ raw material 2 at a mass ratio of 95/5.
(x) = comparative examples

EP 2 128 872 B1

[Table 2]

| Experiment No. | Type | CAS | Cement | Amount of CAS used (%) | Amont of Gypsum used (%) | Contents of Activation Components (mg/kg) | | |
|---|---|---|---|---|---|---|---|---|
| | | | | | | Co | Eu | |
| 2 - 1 | A | a1 | High-alumina cement | 70 | 0 | 0.13 | 0.02 | Comparative |
| 2 - 2 | B | a2 | High-alumina cement | 70 | 0 | 0.13 | 0.02 | Inventive |
| 2 - 3 | C | a3 | High-alumina cement | 70 | 0 | 0.15 | 0.03 | Inventive |
| 2 - 4 | D | a4 | High-alumina cement | 70 | 0 | 0.17 | 0.04 | Inventive |
| 2 - 5 | E | a5 | High-alumina cement | 70 | 0 | 0.18 | 0.04 | Inventive |
| 2 - 7 | G | b1 | High-alumina cement | 70 | 0 | 0.18 | 0.04 | Comparative |
| 2 - 8 | H | b2 | High-alumina cement | 70 | 0 | 0.18 | 0.04 | Inventive |
| 2 - 9 | I | b3 | High-alumina cement | 70 | 0 | 0.16 | 0.04 | Inventive |
| 2 - 10 | J | b4 | High-alumina cement | 70 | 0 | 0.15 | 0.03 | Inventive |
| 2 - 11 | K | b5 | High-alumina cement | 70 | 0 | 0.13 | 0.02 | Inventive |
| 2 - 12 | L | b6 | High-alumina cement | 70 | 0 | 0.13 | 0.02 | Comparative |
| 2 - 14 | N | c2 | High-alumina cement | 70 | 0 | 0.16 | 0.04 | Inventive |
| 2 - 15 | O | c3 | High-alumina cement | 70 | 0 | 0.15 | 0.03 | Inventive |
| 2 - 16 | P | c4 | High-alumina cement | 70 | 0 | 0.15 | 0.03 | Inventive |
| 2 - 17 | Q | c5 | High-alumina cement | 70 | 0 | 0.14 | 0.02 | Inventive |
| 2 - 18 | R | c6 | High-alumina cement | 70 | 0 | 0.13 | 0.02 | Comparative |
| 2 - 19 | S | d1 | High-alumina cement | 70 | 0 | 0.17 | 0.04 | Inventive |
| 2 - 20 | T | d2 | High-alumina cement | 70 | 0 | 0.17 | 0.04 | Comparative |
| 2 - 21 | U | e1 | High-alumina cement | 70 | 0 | 0.17 | 0.04 | Inventive |
| 2 - 22 | V | e2 | High-alumina cement | 70 | 0 | 0.17 | 0.04 | Inventive |
| 2 - 23 | W | e3 | High-alumina cement | 70 | 0 | 0.17 | 0.04 | Inventive |
| 2 - 24 | Z | f1 | High-alumina cement | 70 | 0 | 0.17 | 0.04 | Inventive |

(continued)

| Experiment No. | Type | CAS | Cement | Amount of CAS used (%) | Amont of Gypsum used (%) | Contents of Activation Components (mg/kg) | | |
|---|---|---|---|---|---|---|---|---|
| | | | | | | Co | Eu | |
| 2 - 25 | Y | f2 | High-alumina cement | 70 | 0 | 0.17 | 0.04 | Inventive |
| 2 - 26 | AA | g1 | High-alumina cement | 70 | 0 | 0.17 | 0.04 | Inventive |
| 2 - 27 | AB | g2 | High-alumina cement | 70 | 0 | 0.17 | 0.04 | Inventive |
| 2 - 28 | AC | g3 | High-alumina cement | 70 | 0 | 0. 17 | 0.04 | Inventive |
| 2 - 29 | AD | g4 | High-alumina cement | 70 | 0 | 0.17 | 0.04 | Inventive |
| 2 - 30 | AE | h1 | High-alumina cement | 70 | 0 | 0.17 | 0.04 | Inventive |
| 2 - 31 | AF | h2 | High-alumina cement | 70 | 0 | 0.17 | 0.04 | Inventive |
| 2 - 32 | AG | h3 | High-alumina cement | 70 | 0 | 0.17 | 0.04 | Inventive |
| 2 - 33 | AH | i1 | High-alumina cement | 70 | 0 | 10.53 | 0.21 | Comparative |
| 2 - 34 | AI | i2 | High-alumina cement | 70 | 0 | 10.01 | 0.20 | Comparative |
| 2 - 35 | AJ | i3 | High-alumina cement | 70 | 0 | 7.21 | 0.16 | Comparative |
| 2 - 36 | AK | i4 | High-alumina cement | 70 | 0 | 3.79 | 0.10 | Comparative |
| 2 - 37 | AL | i5 | High-alumina cement | 70 | 0 | 1.20 | 0.06 | Inventive |
| 2 - 38 | AM | i6 | High-alumina cement | 70 | 0 | 0.69 | 0.04 | Inventive |
| 2 - 39 | AQ | a4 | Normal Portland cement | 70 | 0 | 4.09 | 0.18 | Inventive |
| 2 - 40 | AR | a4 | Moderate heat Portland cement | 70 | 0 | 7.00 | 0.17 | Inventive |
| 2 - 41 | AS | a4 | Law heat Portland cement | 70 | 0 | 7.83 | 0.22 | Inventive |
| 2 - 42 | AT | a4 | Fly ash cement | 70 | 0 | 3.63 | 0.33 | Inventive |
| 2 - 43 | AU | a4 | Blast-Furnace cement | 70 | 0 | 3.24 | 0.36 | Inventive |
| 2 - 44 | AV | a4 | White Portland cement | 70 | 0 | 0.60 | 0.11 | Inventive |

(continued)

| Experiment No. | Type | CAS | Cement | Amount of CAS used (%) | Amont of Gypsum used (%) | Contents of Activation Components (mg/kg) | | |
|---|---|---|---|---|---|---|---|---|
| | | | | | | Co | Eu | |
| 2 - 45 | AW | a4 | Alumina cement #1 | 70 | 0 | 4.02 | 0.31 | Inventive |
| 2 - 46 | AX | NO | High-alumina cement | 0 | 0 | 0.28 | 0.03 | Reference |
| 2 - 47 | AY | Fly Ash | High-alumina cement | 70 | 0 | 40.32 | 2.27 | Comparative |
| 2 - 48 | AZ | Blast Furnace Slag | High-alumina cement | 70 | 0 | 2.32 | 2.27 | Comparative |
| 2 - 49 | BA | NO | Normal Portland cement | 0 | 0 | 13.25 | 0.51 | Reference |
| 2 - 50 | BB | NO | Moderate heat Portland cement | 0 | 0 | 22.93 | 0.47 | Reference |
| 2 - 51 | BC | NO | Law heat Portland cement | 0 | 0 | 25.70 | 0.63 | Comparative |
| 2 - 52 | BD | NO | Fly ash cement | 0 | 0 | 11.70 | 0.99 | Comparative |
| 2 - 53 | BE | NO | Blast-Furnace cement | 0 | 0 | 10.40 | 1.12 | Comparative |
| 2 - 54 | BF | NO | White Portland cement | 0 | 0 | 1.59 | 0.28 | Comparative |
| 2 - 55 | BG | NO | Alumina cement #1 | 0 | 0 | 13.00 | 0.94 | Comparative |
| 2 - 56 | Bh | a4 | High-alumina cement | 34 | 0 | 0.24 | 0.03 | Inventive |
| 2 - 57 | BI | a4 | High-alumina cement | 35 | 0 | 0.24 | 0.03 | Inventive |
| 2 - 58 | BJ | a4 | High-alumina cement | 50 | 0 | 0.23 | 0.04 | Inventive |
| 2 - 59 | BK | a4 | High-alumina cement | 60 | 0 | 0.21 | 0.04 | Inventive |
| 2 - 60 | BL | a4 | High-alumina cement | 80 | 0 | 0.19 | 0.04 | Inventive |
| 2 - 61 | BM | a4 | High-alumina cement | 98 | 0 | 0.17 | 0.04 | Inventive |
| 2 - 62 | BN | a4 | High-alumina cement | 99 | 0 | 0.17 | 0.04 | Inventive |
| 2 - 63 | BO | a4 | High-alumina cement | 69 | 1 | 0.17 | 0.04 | Inventive |
| 2 - 64 | BQ | a4 | High-alumina cement | 67 | 3 | 0.19 | 0.04 | Inventive |

(continued)

| Experiment No. | Type | CAS | Cement | Amount of CAS used (%) | Amont of Gypsum used (%) | Contents of Activation Components (mg/kg) | | |
|---|---|---|---|---|---|---|---|---|
| | | | | | | Co | Eu | |
| 2 - 65 | BR | a4 | High-alumina cement | 65 | 5 | 0.20 | 0.04 | Inventive |
| 2 - 66 | BS | a4 | High-alumina cement | 60 | 10 | 0.23 | 0.04 | Inventive |
| 2 - 67 | BT | a4 | High-alumina cement | 59 | 11 | 0.24 | 0.04 | Inventive |

CAS is an abbreviation of calcium aluminosilicate.
Amounts of CAS and gypsum used are given in part in 100 parts of low-activation cement comprising calcium aluminosilicate and gypsum.

Example 2

The low-activation cements shown in Table 2 were measured for residual radiations by a given method. The results are set out in Table 3.

(Measuring Method)

$\sum D/C$: Residual radiations after irradiation with thermal neutrons were carried out as follows. A sample was pulverized to a particle size of 1 mm or less in an alumina mortar, and 100 mg of the powders were filled in a quartz tube (having an outer diameter of 7 mm, a length of 40 mm and a thickness of 1 mm with 99.99997% $SiO_2$ purities). The sample filled in the quartz tube was irradiated with thermal neutrons (a nominal thermal neutron bundle of $5.3 \times 10^{13}$ $ncm^{-2}$ $s^{-1}$ (at the maximum output of 5.3 MW)) for 40 minutes in a material testing furnace at the Japan Atomic Energy Agency Tokai Research Center (JMTR), and then cooled down for sixth months. Thereafter, the radiation concentrations of $^{154}Eu$, $^{152}Eu$ and $^{60}Co$ remaining in each sample were measured on a Ge semiconductor sensor. On the basis of the ensuing results, $\sum D/C$ given by Numerical Formula I was estimated by computation.

$$\mathtt{Numerical\ Formula\ 1}$$

$$\sum D/C = D_{152\text{-Eu}}/C_{152\text{-Eu}} + D_{154\text{-Eu}}/C_{154\text{-Eu}} + D_{60\text{-Co}}/C_{60\text{-Co}}$$

Note here that $D_{152\text{-Eur}}$, $D_{154\text{-Eu}}$ and $D_{60\text{-Co}}$ are indicative of the radiation concentrations of $^{152}Eu$, $^{154}Eu$ and $^{61}Co$ found by computation on the assumption that each thermal neutron bundle is only $2.0 \times 10^5$ $ncm^{-2}$ $sec^{-1}$, and $C_{152\text{-Eu}}$, $C_{154\text{-Eu}}$ and $C_{60\text{-Co}}$ are indicative of the clearance levels for nuclear reactors in Japan (enforced on December 1, 2005), all being 0.1.

[Table 3]

| Experiment No. | Type | $\sum D/C$ | |
|---|---|---|---|
| 3-1 | A | 0.31 | Comparative |
| 3-2 | B | 0.31 | Inventive |
| 3-3 | C | 0.44 | Inventive |
| 3-4 | D | 0.58 | Inventive |
| 3-5 | E | 0.59 | Inventive |
| 3-7 | G | 0.59 | Comparative |
| 3-8 | H | 0.59 | Inventive |
| 3-9 | I | 0.68 | Inventive |
| 3-10 | J | 0.44 | Inventive |
| 3-11 | K | 0.31 | Comparative |

(continued)

| Experiment No. | Type | ∑D/C | |
|---|---|---|---|
| 3-12 | L | 0.31 | Comparative |
| 3-14 | N | 0.68 | Comparative |
| 3-15 | 0 | 0.44 | Inventive |
| 3-16 | P | 0.44 | Inventive |
| 3-17 | Q | 0.31 | Inventive |
| 9-18 | R | 0.31 | Comparative |
| 3-19 | S | 0.58 | Inventive |
| 3-20 | T | 0.68 | Comparative |
| 3-21 | U | 0.58 | Inventive |
| 3-22 | V | 0.58 | Inventive |
| 3-23 | W | 0.58 | Inventive |
| 3-24 | Z | 0.58 | Inventive |
| 3-25 | Y | 0.68 | Inventive |
| 3-26 | AA | 0.58 | Inventive |
| 3-27 | AB | 0.58 | Inventive |
| 3-28 | AC | 0.58 | Inventive |
| 3-29 | AD | 0.58 | Inventive |
| 3-30 | AE | 0.58 | Inventive |
| 3-31 | AF | 0.58 | Inventive |
| 3-32 | AG | 0.58 | Inventive |
| 3-33 | AH | 6.23 | Comparative |
| 3-34 | AI | 5.93 | Comparative |
| 3-35 | AJ | 4.48 | Comparative |
| 3-36 | AK | 2.57 | Comparative |
| 3-37 | AL | 1.19 | Inventive |
| 3-38 | AM | 0.76 | Inventive |
| 3-39 | AQ | 3.72 | Inventive |
| 3-40 | AR | 4.54 | Inventive |
| 3-41 | AS | 5.48 | Inventive |
| 3-42 | AT | 5.54 | Inventive |
| 3-43 | AU | 5.81 | Inventive |
| 3-44 | AV | 1.65 | Inventive |
| 3-45 | AW | 5.41 | Inventive |
| 3-46 | AX | 0.49 | Reference |
| 3-47 | AY | 43.18 | Comparative |
| 3-48 | AZ | 30.66 | Comparative |
| 3-49 | BA | 11.08 | Reference |
| 3-50 | BB | 13.74 | Reference |
| 3-51 | BC | 16.T6 | Comparative |
| 3-52 | BD | 16.89 | Comparative |
| 3-53 | BE | 18.18 | Comparative |
| 3-54 | BF | 4.21 | Comparative |
| 3-55 | BG | 16.66 | Comparative |
| 3-56 | Bh | 0.47 | Inventive |
| 3-57 | BI | 0.47 | Inventive |
| 3-58 | BJ | 0.60 | Inventive |

(continued)

| Experiment No. | Type | $\sum$D/C | |
|---|---|---|---|
| 3-59 | BK | 0.60 | Inventive |
| 3-60 | BL | 0.59 | Inventive |
| 3-61 | BM | 0.58 | Inventive |
| 3-62 | BN | 0.58 | Inventive |
| 3-63 | BO | 0.58 | Inventive |
| 3-64 | BQ | 0.59 | Inventive |
| 3-65 | BR | 0.59 | Inventive |
| 3-66 | BS | 0.60 | Inventive |
| 3-67 | BT | 0.61 | Inventive |

From Tables 2 and 3, it is understood that the inventive calcium aluminosilicate is improved in terms of the low-activation function because of reduced Eu and Co contents.

Example 3

The low-activation cements shown in Table 2 were used to carry out mortar concrete testing. The ensuing results are set out in Table 4.

(Materials Used)

Standard Sand

Commercial product made and sold by Japan Cement Association in the name of "Standard Sand for Cement Strength Testing" and with a specific weight of 2.64.

Sand

Lime sand occurring with a specific weight of 2.68 in Oume in Niigata Prefecture.

Gravel

Lime debris occurring in Oume in Niigata Prefecture and with Gmax (the maximum size of aggregate)=20 mm and a specific weight of 2.74.

Water

Tap Water

(Measuring Methods)

Flow Testing

Mortar was kneaded according to JIS R 5201-1997 "Physical Testing Method for Cements", and just after kneading, 15-point flow values were measured. Temperature, humidity and mortar blending were the same as those in compressive strength testing. Standard sand was used for testing.

Compressive Strength Testing

A mortar test piece of 40 mm$\times$40 mm$\times$160 mm was prepared according to JIS R 5201-1997 "Physical Testing Method for Cements", and sealed up by an aluminum tape. Seven days and 28 days after sealing, the test piece was measured for compressive strength. Standard sand was used for testing.

Measurement of Length Change

A mortar test piece of 40 mm×40 mm×160 mm was prepared according to JIS R 5201-1997 "Physical Testing Method for Cements", and sealed up by an aluminum tape. Seven days and 28 days after sealing, length changes were measured according to JIS A 6202-1997 "Inflating Materials for Concretes" Appendix 2 (for reference) "Restricted Inflation and Shrinkage Testing Method - B Method (testing method for inflation and shrinkage). Standard sand was used for testing.

Increase in Adiabatic Temperature

A concrete sample comprising 300 kg/m$^3$ of unit composition for low-activation cement and 150 kg/m$^3$ of unit water at a water-powder ratio of 50% and a fine aggregate ratio of s/a=42% was prepared in an environment of 20°C. This concrete sample was molded into a size of 40 mm×40 mm×160 mm, and then removed from the mold after one material day to measure the increase in adiabatic temperature. An adiabatic calorimeter (ACM-202L Model made by Tokyo Ricoh Kabushiki Kaisha) was used to implement measurements until 7 material days under the condition of a pouring temperature of 20°C. For measurements sand and gravel were used.

[Table 4]

| Experiment No. | Type | 15-Point flow value (mm) | Compressive strength (N/mm$^2$) | | Length changes ($\times 10^{-6}$) | | Increase in Adiabatic temperature (°C) | |
|---|---|---|---|---|---|---|---|---|
| | | | 7 days | 28 days | 7 days | 28 days | | |
| 4-1 | A | 110 | 19.7 | 31.2 | -17 | -27 | 43.2 | Comparative |
| 4-2 | B | 115 | 18.9 | 32.3 | -16 | -26 | 43.0 | Inventive |
| 4-3 | C | 135 | 18.9 | 32.4 | -17 | -22 | 42.1 | Inventive |
| 4-4 | D | 152 | 21.6 | 35.8 | -15 | -19 | 42.8 | Inventive |
| 4-5 | E | 155 | 20.9 | 36.3 | -14.0 | -22 | 43.2 | Inventive |
| 4-7 | G | 105 | 16.9 | 32.1 | -16 | -31 | 44.1 | Comparative |
| 4-8 | H | 112 | 17.9 | 31.9 | -18 | -27 | 44.2 | Inventive |
| 4-9 | I | 143 | 19.6 | 32.9 | -27 | -44 | 42.1 | Inventive |
| 4-10 | J | 134 | 20.0 | 33.1 | -32 | -51 | 43.1 | Inventive |
| 4-11 | K | 137 | 19.1 | 32.6 | -37 | -61 | 44.4 | Comparative |
| 4-12 | L | 142 | 18.9 | 31.8 | -45 | -73 | 45.6 | Comparative |
| 4-14 | N | 141 | 24.3 | 33.9 | -90 | -158 | 43.0 | Comparative |
| 4-15 | O | 135 | 20.7 | 32.4 | -17 | -22 | 42.1 | Inventive |
| 4-16 | P | 127 | 20.6 | 31.9 | -18 | -24 | 43.1 | Inventive |
| 4-17 | Q | 120 | 20.4 | 32.0 | -20 | -27 | 42.1 | Inventive |
| 4-18 | R | 115 | 20.10 | 32.4 | -19 | -29 | 42.3 | Comparative |
| 4-19 | S | 189 | 23.7 | 35.0 | -27 | -20 | 50.2 | Inventive |
| 4-20 | T | 190 | 24.9 | 34.8 | -34 | -25 | 53.4 | Comparative |
| 4-21 | U | 168 | 21.9 | 38.9 | -7 | -37 | 42.1 | Inventive |
| 4-22 | V | 176 | 22.3 | 46.0 | -13 | -46 | 43.9 | Inventive |
| 4-23 | W | 160 | 23.7 | 47.7 | -19 | -57 | 47.6 | Inventive |
| 4-24 | Z | 176 | 24.8 | 36.1 | -18 | -23 | 41.9 | Inventive |
| 4-25 | Y | 180 | 23.9 | 36.7 | -19 | -27 | 42.9 | Inventive |
| 4-26 | AA | 108 | 19.0 | 29.7 | -38 | -102 | 51.0 | Inventive |
| 4-27 | AB | 112 | 19.7 | 30.9 | -40 | -100 | 50.7 | Inventive |
| 4-28 | AC | 135 | 21.0 | 33.2 | -14 | -36 | 49.1 | Inventive |
| 4-29 | AD | 147 | 22.3 | 36.1 | -10 | -22 | 47.0 | Inventive |
| 4-30 | AE | 125 | 22.1 | 35.2 | -17 | -23 | 43.1 | Inventive |
| 4-31 | AF | 114 | 20.7 | 34.1 | -22 | -32 | 44.7 | Inventive |

(continued)

| Experiment No. | Type | 15-Point flow value (mm) | Compressive strength (N/mm$^2$) | | Length changes ($\times 10^{-6}$) | | Increase in Adiabatic temperature (°C) | |
|---|---|---|---|---|---|---|---|---|
| | | | 7 days | 28 days | 7 days | 28 days | | |
| 4-32 | AG | 100 | 19.0 | 33.2 | -27 | -40 | 45.1 | Inventive |
| 4-33 | AH | 148 | 40.2 | 63.4 | -237 | -290 | 41.8 | Comparative |
| 4-34 | AI | 151 | 37.1 | 62.1 | -134 | -170 | 40.9 | Comparative |
| 4-35 | AJ | 152 | 35.4 | 56.1 | -100 | -135 | 43.1 | Comparative |
| 4-36 | AK | 150 | 29.1 | 52.0 | -70 | -106 | 42.7 | Comparative |
| 4-37 | AL | 151 | 20.8 | 41.0 | -50 | -76 | 41.9 | Inventive |
| 4-38 | AM | 153 | 22.3 | 34.9 | -10 | -45 | 43.1 | Inventive |
| 4-39 | AQ | 115 | 19.1 | 32.1 | -14 | -19 | 40.6 | Inventive |
| 4-40 | AR | 114 | 19.4 | 29.1 | -13 | -17 | 38.9 | Inventive |
| 4-41 | AS | 117 | 17.2 | 30.4 | -10 | -14 | 30.8 | Inventive |
| 4-42 | AT | 118 | 18.9 | 37.1 | -12 | -14 | 37.2 | Inventive |
| 4-43 | AU | 113 | 19.7 | 35.1 | -18 | -32 | 36.9 | Inventive |
| 4-44 | AV | 110 | 23.1 | 34.3 | -14 | -27 | 47.3 | Inventive |
| 4-45 | AW | 147 | 27.4 | 41.2 | -200 | -320 | 60.0 | Inventive |
| 4-46 | AX | 178 | 37.5 | 55.7 | -311 | -407 | 70.6 | Reference |
| 4-47 | AY | 157 | 19.0 | 27.0 | -25 | -40 | 39.8 | Comparative |
| 4-48 | AZ | 147 | 30.4 | 45.8 | -148 | -85 | 52.3 | Comparative |
| 4-49 | BA | 112 | 22.9 | 34.8 | 19 | -22 | 45.4 | Reference |
| 4-50 | BB | 113 | 18.2 | 33.9 | 3 | -19 | 42.1 | Reference |
| 4-51 | BC | 115 | 15.6 | 30.5 | 2 | -16 | 36.7 | Comparative |
| 4-52 | BD | 121 | 20.2 | 33.7 | 2 | -16 | 43.3 | Comparative |
| 4-53 | BE | 108 | 18.2 | 34.3 | -12 | -40 | 43.7 | Comparative |
| 4-54 | BF | 106 | 26.1 | 35.5 | -15 | -34 | 53.4 | Comparative |
| 4-55 | BG | 159 | 45.5 | 58.1 | -481 | -596 | 112.7 | Comparative |
| 4-56 | BH | 168 | 34.1 | 34.1 | -27 | -40 | 46.1 | Inventive |
| 4-57 | BI | 168 | 35.3 | 35.2 | -19 | -37 | 45.2 | Inventive |
| 4-58 | BJ | 162 | 31.8 | 37.2 | -10 | -21 | 44.2 | Inventive |
| 4-59 | BK | 158 | 29.8 | 34.9 | -8 | -23 | 43.9 | Inventive |
| 4-60 | BL | 137 | 20.4 | 29.6 | -11 | -25 | 43.1 | Inventive |
| 4-61 | BM | 121 | 13.2 | 22.4 | -14 | -27 | 39.8 | Inventive |
| 4-62 | BN | 115 | 10.9 | 21.9 | -17 | -30 | 38.7 | Inventive |
| 4-63 | BO | 150 | 27.5 | 32.1 | -8 | -15 | 41.7 | Inventive |
| 4-64 | BQ | 147 | 24.8 | 31.7 | -7 | -13 | 40.9 | Inventive |
| 4-65 | BR | 134 | 21.3 | 27.8 | -4 | -7 | 39.7 | Inventive |
| 4-66 | BS | 110 | 16.4 | 23.1 | -3 | -4 | 35.1 | Inventive |
| 4-67 | BT | 105 | 16.2 | 22.8 | -1 | -3 | 30.2 | Inventive |

From Table 4, it is understood that the inventive low-activation cement is superior in fluidity to white cement, and much more reduced in self-shrinkage than high-alumina cement. It is also understood that the inventive low-activation cement is much more reduced in the increase in adiabatic temperature regardless of cement type.

APPLICABILITY TO THE INDUSTRY

The inventive low-activation hydraulic composition does not only reduce the contents of Eu and Co responsible for residual radiations, but also makes low heat-of-hydration temperature ascribable to temperature cracking and has the satisfactory ability to develop strength. The inventive low-activation hydraulic composition may be well used for cement concrete structures at atomic energy installations, accelerator installations, and so on.

**Claims**

1. A low-activation hydraulic composition, wherein calcium aluminosilicate has a chemical composition comprising, in a total of CaO, $Al_2O_3$, $SiO_2$, MgO and $ZrO_2$, 25 to 55 parts of CaO, 16 to 45 parts of $Al_2O_3$, 23 to 40 parts of $SiO_2$, 0 to 1 part of MgO and 0 to 4 parts of $ZrO_2$, with an Eu content being less than 0.08 mg/kg and a Co content being less than 2 mg/kg, and wherein the calcium aluminosilicate has a percentage of glass content of at least 70%.

2. The low-activation hydraulic composition according to claim 1, having a free calcium oxide content of 0 to less than 2 parts in the calcium aluminosilicate.

3. A method for manufacturing the low-activation hydraulic composition according to claim 1 or 2, **characterized in that** a CaO raw material, an $Al_2O_3$ raw material, an $SiO_2$ raw material, an MgO raw material and a $ZrO_2$ raw material are fused and quenched for production.

4. A low-activation cement, wherein the low-activation hydraulic composition according to claim 1 or 2 is mixed with cement.

5. The low-activation cement according to claim 4, **characterized by** further containing gypsum.

6. The low-activation cement according to claim 4, wherein 35 to 98 parts of a low-activation hydraulic composition are contained in 100 parts of low-activation cement.

7. A method for manufacturing low-activation cement by mixing, wherein 35 to 98 parts of the low-activation hydraulic composition manufactured according to claim 3 are contained in 100 parts of low-activation cement.

**Patentansprüche**

1. Hydraulische Zusammensetzung mit niedriger Aktivierung,
wobei Kalziumaluminiumsilikat eine chemische Zusammensetzung hat, die in einer Gesamtmenge von CaO, $Al_2O_3$, $SiO_2$, MgO und $ZrO_2$ 25 bis 55 Teile CaO, 16 bis 45 Teile $Al_2O_3$, 23 bis 40 Teile $SiO_2$, 0 bis 1 Teil MgO und 0 bis 4 Teile $ZrO_2$ aufweist, wobei der Eu-Gehalt weniger als 0,08 mg/kg und der Co-Gehalt weniger als 2 mg/kg beträgt, und
wobei das Kalziumaluminiumsilikat einen prozentualen Glasgehalt von mindestens 70% aufweist.

2. Hydraulische Zusammensetzung mit niedriger Aktivierung nach Anspruch 1, mit einem Gehalt an freiem Kalziumoxid von 0 bis weniger als 2 Teile im Kalziumaluminiumsilikat.

3. Verfahren zum Herstellen der hydraulischen Zusammensetzung mit niedriger Aktivierung nach Anspruch 1 oder 2, **dadurch gekennzeichnet, dass** ein CaO-Rohmaterial, ein $Al_2O_3$-Rohmaterial, ein $SiO_2$-Rohmaterial, ein MgO-Rohmaterial und ein $ZrO_2$-Rohmaterial zur Herstellung geschmolzen und abgekühlt werden.

4. Zement mit niedriger Aktivierung, wobei die hydraulische Zusammensetzung mit niedriger Aktivierung nach Anspruch 1 oder 2 mit Zement gemischt wird.

5. Zement mit niedriger Aktivierung nach Anspruch 4, **dadurch gekennzeichnet, dass** er ferner Gips aufweist.

6. Zement mit niedriger Aktivierung nach Anspruch 4, wobei 35 bis 98 Teile einer hydraulischen Zusammensetzung mit niedriger Aktivierung in 100 Teilen Zement mit niedriger Aktivierung enthalten sind.

7. Verfahren zur Herstellung eines Zements mit niedriger Aktivierung durch Mischen, wobei 35 bis 98 Teile der gemäß Anspruch 3 hergestellten hydraulischen Zusammensetzung mit niedriger Aktivierung in 100 Teilen Zement mit niedriger Aktivierung enthalten sind.

**EP 2 128 872 B1**

**Revendications**

1. Composition hydraulique de faible activation,
dans laquelle un aluminosilicate de calcium présente une composition chimique comprenant, dans un total de CaO, $Al_2O_3$, $SiO_2$, MgO et $ZrO_2$, de 25 à 55 parties de CaO, de 16 à 45 parties d'$Al_2O_3$, de 23 à 40 parties de $SiO_2$, de 0 à 1 partie de MgO et de 0 à 4 parties de $ZrO_2$, avec une teneur en Eu étant inférieure à 0,08 mg/kg et une teneur en Co étant inférieure à 2 mg/kg, et
dans laquelle l'aluminosilicate de calcium présente un pourcentage de teneur en verre d'au moins 70 %.

2. Composition hydraulique de faible activation selon la revendication 1, présentant une teneur en oxyde de calcium libre de 0 à moins de 2 parties dans l'aluminosilicate de calcium.

3. Procédé de fabrication de la composition hydraulique de faible activation selon la revendication 1 ou 2, **caractérisé en ce qu'**une matière brute de CaO, une matière brute d'$Al_2O_3$, une matière brute de $SiO_2$, une matière brute de MgO et une matière brute de $ZrO_2$ sont fondues et trempées pour la production.

4. Ciment de faible activation, dans lequel la composition hydraulique de faible activation selon la revendication 1 ou 2 est mélangée avec du ciment.

5. Ciment de faible activation selon la revendication 4, **caractérisé en ce qu'**il contient de plus du gypse.

6. Ciment de faible activation selon la revendication 4, dans lequel de 35 à 98 parties d'une composition hydraulique de faible activation sont contenues dans 100 parties de ciment de faible activation.

7. Procédé de fabrication de ciment de faible activation par mélange, dans lequel de 35 à 98 parties de la composition hydraulique de faible activation fabriquée selon la revendication 3 sont contenues dans 100 parties de ciment de faible activation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62133394 A
- US 4605443 A
- JP 2501576 B
- JP 61215999 A

- EP 0579831 A1
- JP 2002328195 A
- JP 62035295 A

### Non-patent literature cited in the description

- The Present Situation of Development of Low-Activation Concrete. **MASAHARU KANEKO.** Concrete Engineering. Japan Concrete Institute, June 2004, vol. 42, 3-10
- **MASAHARU KINNO ; KEN-ICHI KIMURA ; TAKASHI NAKAMURA.** Raw Materials for Low-Activation Concrete Neutron Shields. *Journal of NUCLEAR SCIENCE and TECHNOLOGY,* December 2002, vol. 39 (12), 1275-1280
- **KOJI SHIRAI ; RYOJI SONOBE.** Development of Low-Activation and High-Performance Materials for Concrete Casks. *Central Research Institute of Electric Power Industry Report,* July 2005
- STRATLINGITE AND HYDROGARNET FROM CALCIUM ALUMINOSILICATE GLASS CEMENTS. **JOHN F. MACDOWELL.** Mat. Res. Soc. Symp. Proc. Materials Research Society, 1991, vol. 179, 159-179

- **YASUO ARAI.** Material Chemistry of Cements. Dainippon Tosho Publishing Co., Ltd, 210-211
- Clearance levels of radionuclides in solid materials. International Atom Energy Association, January 1996
- Chemical analysis method for Portland cements. *JIS R 5202,* 1999
- Chemical analysis method for alumina-zirconia-silica base refractory materials. *JIS R 2013,* 1998
- Chemical analysis method for alumina cement for refractory materials. *JIS R 2522,* 1995
- Physical Testing Method for Cements. *JIS R 5201,* 1997
- Inflating Materials for Concretes. *JIS A 6202,* 1997